Europäisches Patentamt

**European Patent Office**

**Office européen des brevets**

(11) Numéro de publication: **0 274 299 B1**

# FASCICULE DE BREVET EUROPEEN

(45) Date de publication de fascicule du brevet: **04.03.92**   (51) Int. Cl.⁵: **A01B  49/02**, A01B 17/00

(21) Numéro de dépôt: **87402717.0**

(22) Date de dépôt: **01.12.87**

(54) **Système d'attelage à une charrue brabant d'un appareil agricole à remorquer.**

(30) Priorité: **02.12.86 FR 8616829**

(43) Date de publication de la demande:
**13.07.88 Bulletin  88/28**

(45) Mention de la délivrance du brevet:
**04.03.92 Bulletin  92/10**

(84) Etats contractants désignés:
**AT BE DE ES FR GB IT NL SE**

(56) Documents cités:
CH-A- 279 193          DE-A- 3 207 324
DE-A- 3 414 081        DE-U- 8 523 386
GB-A- 2 137 461        US-A- 3 183 981
US-A- 3 232 354        US-A- 3 357 500

(73) Titulaire: **Lechopier, Jean-Claude**
**Bornay-Champvert**
**F-58300 Decize(FR)**

(72) Inventeur: **Lechopier, Jean-Claude**
**Bornay-Champvert**
**F-58300 Decize(FR)**

(74) Mandataire: **Rinuy, Santarelli**
**14, avenue de la Grande Armée**
**F-75017 Paris(FR)**

Rank Xerox (UK) Business Services

## Description

La présente invention se rapporte à un système d'attelage à une charrue brabant d'un appareil agricole à remorquer selon le préambule de la revendication 1.

On sait que les charrues brabants sont prévues pour être attelées à un tracteur se déplaçant sur un sol à travailler suivant un axe de déplacement, cette charrue comportant une partie prévue pour être pivotante d'un demi-tour entre deux positions de travail, autour d'un axe de retournement sensiblement superposé à l'axe de déplacement du tracteur, cette partie pivotante comportant une poutre porteuse de corps de labourage disposée, en position de travail, en oblique par rapport à l'axe de déplacement, l'angle entre un plan perpendiculaire au sol contenant cette poutre et l'axe de déplacement étant dit déport tandis que, dans ce plan, l'inclinaison de la poutre par rapport au sol est dite dévers, lesdits corps de labourage étant installés le long de cette poutre en deux séries parallèles symétriques par rapport à la poutre, les corps de labourage d'une première desdites séries comportant des versoirs à droite, dans le sens du déplacement, cette première série travaillant le sol dans une première desdites positions de travail de la charrue, tandis qu'une deuxième desdites séries de corps de labourage comporte des versoirs à gauche et correspond à une deuxième desdites positions de travail, la terre travaillée étant ainsi versée d'un même côté par rapport à la partie pivotante dans les deux positions de travail de la charrue.

Après le passage du brabant, le sol a une structure grossière qu'il est nécessaire d'affiner avant de faire un semis.

Par conséquent on effectue généralement un deuxième passage du tracteur dans lequel celui-ci remorque un appareil de préparation complémentaire du sol, derrière lequel on attelle le plus souvent un semoir.

Ce deuxième passage est très pénalisant car il faut y consacrer du temps et du carburant. Au surplus, le passage du tracteur sur une terre précédemment labourée provoque un tassement de celle-ci à l'emplacement des roues, qui nuit au rendement des cultures.

Le document US-A-3.232.354, qui est une continuation-in-part du document US-A-3.183.386, décrit un appareil combinant sensiblement les caractéristiques figurant dans le préambule de la revendication 1.

L' invention propose un système de remorquage conforme à la revendication 1.

La disposition et la structure des éléments de la charrue alliés à la mobilité de certains de ceux-ci ont posé au demandeur le problème technique du positionnement du système d'attelage sur la charrue.

En effet, non seulement la charrue a une orientation générale en oblique par rapport à la trajectoire du tracteur, mais en bout de champ il est nécessaire d'effectuer un retournement de la charrue en faisant tourner la partie pivotante d'un demi-tour autour de l'axe de retournement, et notamment la poutre porteuse des corps de labourage, afin de pouvoir verser la terre du même côté par rapport au champ lorsque le tracteur reprendra le travail en sens inverse après avoir effectué un demi-tour.

Pour effectuer cette manoeuvre de retournement, on actionne d'abord un dispositif de commande du dévers de la charrue afin de la relever par rapport au sol pour dégager les corps de labourage, on effectue le retournement de la partie pivotante, et on règle à nouveau le dévers lorsqu'on reprend le travail en sens inverse.

La fixation d'un bâti sur la partie pivotante de la charrue, du côté du versement de la terre et sensiblement dans un plan médian par rapport aux deux séries de corps de labourage permet d'avoir un point d'accrochage solidaire de la charrue qui soit du côté du versement de la terre dans chacune des deux positions de travail de la charrue, tout en étant pour chacune de celles-ci sensiblement dans une même position relative par rapport au sol.

L'appareil à remorquer suit ainsi, pour chacune des deux positions de travail, une trajectoire décalée par rapport à celle du tracteur, dans le sens correspondant à l'action des versoirs sur la terre. Il est ainsi parfaitement positionné pour effectuer un travail complémentaire sur la terre labourée.

En outre des avantages apportés par le positionnement du point d'accrochage lorsque la charrue est au travail, il faut noter qu'il est également très intéressant lors du retournement de la charrue.

En effet, sur la partie pivotante d'une charrue, c'est pratiquement toujours le côté du versement de la terre que l'on fait passer en position haute lors du retournement, afin d'éviter tous risques de chocs des versoirs (montés du côté du versement) contre le sol. Le bâti passera par conséquent en partie haute, ce qui offre l'avantage d'éviter d'avoir à limiter son encombrement, et notamment sa dimension prise transversalement à l'axe de déplacement, en position de travail.

Ce positionnement d'un point d'accrochage sur la charrue, malgré ses avantages, a posé un autre problème technique au demandeur : au cours du retournement de la charrue, l'appareil à remorquer doit passer d'un côté à l'autre de l'axe de déplacement du tracteur, le point d'accrochage passant par un point relativement haut au milieu de l'opération de retournement.

Pour résoudre ce problème le demandeur a prévu une barre d'attelage entre le bâti et l'appareil. Ceux-ci sont donc maintenus éloignés en position de travail de la charrue, et grâce à cet éloignement on évite d'avoir à faire passer l'appareil à remorquer d'un côté à l'autre de l'axe de déplacement du tracteur au cours du retournement : à la fin de celui-ci il est resté du même côté, la barre est en oblique par rapport à la direction de déplacement du tracteur, ce qui ne demande à l'appareil à remorquer qu'un simple changement de direction de déplacement, qu'il fait aisément comme toute remorque.

Afin de permettre le mouvement précédemment décrit, il faut également que l'un au moins des dispositifs d'accrochage que supporte la barre à ses extrémités puissent se déformer, non seulement pour permettre des changements dans la direction de déplacement de l'appareil à remorquer, mais aussi pour permettre que le point d'accrochage du bâti puisse se lever et s'abaisser dans un mouvement semi-circulaire à la fin duquel il se retrouve dessus- dessous.

Lorsque l'appareil à remorquer est un appareil de préparation complémentaire d'un sol labouré auquel est attelé un semoir, par exemple un appareil tel que celui faisant l'objet de la demande de brevet Français N° 86.15217 déposée par le requérant, l'invention offre l'avantage de permettre de réaliser le travail complet du champ en un seul passage, d'où une économie considérable en temps, en carburant et en usure du tracteur, à laquelle s'ajoute l'absence d'écrasement du sol labouré par les roues du tracteur, qui permet d'améliorer le rendement de la culture.

En outre l'attelage est d'un emploi simple et commode, et permet aisément les retournements de charrue et demi-tour du tracteur en bout du champ, de la façon habituelle, car il n'introduit aucune gêne ni manoeuvre délicate.

Conformément à une caractéristique de l'invention, le premier dispositif d'accrochage autorise un mouvement relatif à trois degrés de liberté en rotation entre le bâti et la barre d'attelage, tandis que le deuxième dispositif d'accrochage autorise entre la barre d'attelage et l'appareil à remorquer un mouvement relatif à un degré de liberté en rotation, autour d'un axe sensiblement parallèle au sol et perpendiculaire à la direction prévue pour le déplacement de l'appareil à remorquer.

On obtient ainsi la déformation nécessaire de l'attelage : le deuxième dispositif permet des mouvements de montée et de descente de la barre d'attelage par rapport à l'appareil remorqué, tandis que le premier dispositif d'accrochage permet à la barre de tourner par rapport au bâti à la fois lors d'un changement dans la direction de déplacement, d'un mouvement de montée ou de descente du bâti, ou d'un mouvement tel que celui à la fin duquel l'un des deux éléments est retourné dessus-dessous.

Au cours du retournement de la charrue, les deux dispositifs d'accrochage vont se déformer, la barre d'attelage va se soulever en même temps que le point d'accrochage du bâti, l'appareil à remorquer se rapprochant par conséquent de la charrue tout en changeant de direction de déplacement, puis la barre et le point d'accrochage se rabaisseront et l'appareil à remorquer s'éloignera de la charrue tout en continuant à changer de direction.

Les rotations permises par les dispositifs d'accrochage offrent l'avantage de limiter les contraintes subies par la charrue lors du retournement, notamment lorsque le point d'accrochage du bâti est en position haute, l'articulation du deuxième dispositif d'accrochage permettant, en rendant possible l'avancement puis le recul de l'appareil à remorquer, d'éviter de soulever le point d'accrochage de l'appareil à remorquer au cours du retournement.

Selon une autre caractéristique de l'invention, les moyens de montage desdits premiers moyens d'accrochage sont disposés vers l'arrière de la charrue et ladite barre d'attelage a une longueur telle que la distance séparant lesdits premiers et deuxièmes dispositifs d'accrochage est au moins égale à la distance comprise entre l'extrémité arrière de la charrue et lesdits moyens de montage du premier dispositif d'accrochage que porte le bâti.

Ces caractéristiques offrent l'avantage de permettre que l'angle entre les axes de déplacement du tracteur et de l'appareil à remorquer puisse atteindre approximativement 90˚, lorsque le tracteur tourne du côté opposé à celui du versement de la terre, car l'arrière de la charrue peut venir pratiquement contre la barre d'attelage, ce qui se produit généralement lors des demi-tours du tracteur en bout de champ.

Selon une caractéristique préférée de l'invention, le bâti comporte un dispositif d'ajustement de la position des moyens de montage du premier dispositif d'accrochage.

On sait que la terre travaillée, pour chaque position de travail de la charrue, est centrée sur un axe de labourage situé du côté du versement de la terre parallèlement à l'axe de déplacement du tracteur. Il est souhaitable de centrer les moyens de montage dudit premier dispositif d' accrochage au voisinage d'un plan perpendiculaire au sol contenant l' axe de labourage, pour centrer l' appareil à remorquer. En d'autres termes, on souhaite placer le point d'accrochage au-dessus de l'axe de labourage, c' est-à-dire en un lieu relativement distant de l'extrémité arrière de La charrue, cette distance étant égale à la somme de la distance séparant l'extrémité arrière de la charrue de l' axe de dépla-

cement du tracteur et de la distance séparant celui-ci de l'axe de labourage.

Au travail, le dispositif d'ajustement de la position du point d'accrochage du bâti est très avantageux sur une charrue à déport variable car il permet de s'adapter au réglage du déport.

Un autre avantage est apporté par ce dispositif lors du retournement, à la fois pour les charrues à déport fixe et à déport variable : au cours du retournement, le point d'accrochage passe par un point haut situé au-dessus du sol à une distance maximale approximativement égale à la somme de la distance comprise entre le point d'accrochage et l'extrémité arrière de la charrue, et de la hauteur par rapport au sol de cette extrémité en position de dévers maximal.

Il faudrait donc prévoir, sans dispositif d'ajustement, pour ne pas soulever le point d'accrochage de l'attelage sur l'appareil à remorquer, une barre d'attelage de longueur au moins égale à cette hauteur maximale par rapport au sol, tandis qu'avec le dispositif d'ajustement il est possible de réduire cette distance, en déplaçant le point d'accrochage du bâti vers l'extrémité arrière de la charrue, avant de parvenir au point haut.

D'autres caractéristiques, particularités et avantages de l'invention apparaîtront au cours de la description de modes particuliers de réalisation donnée ci-après, uniquement à titre d'exemples, non limitatifs, en référence aux dessins annexés. Sur ces dessins :

- la figure 1 est une vue de dessus schématique illustrant, en position de travail, un tracteur portant une charrue à laquelle un appareil agricole à remorquer est attelé par un système conforme à l'invention;
- la figure 2 est une vue de côté schématique de l'ensemble représenté sur la figure 1, au milieu d'une phase de retournement de la charrue, pour un premier mode de réalisation de l'attelage où le bâti monté sur la charrue est rigide;
- la figure 3 est une vue de dessus schématique d'un ensemble tel que représenté sur les figures 1 et 2, à la fin d'une phase de retournement de la charrue s'étant déroulée alors que le tracteur est arrêté, pour un mode de réalisation de l'attelage où le dispositif d'accrochage entre le bâti et la barre d'attelage permet entre ceux-ci un mouvement relatif à trois degrés de liberté en rotation tandis que le dispositif d'accrochage reliant la barre et l'appareil à remorquer permet un degré de liberté en rotation entre ceux-ci;
- la figure 4 est une vue de dessus schématique de l'ensemble représenté sur la figure 3, les directions de déplacement du tracteur et de l'appareil à remorquer faisant un angle sensiblement égal à 90˚;
- la figure 5 est une vue de côté schématique similaire à la figure 2, mais pour un mode de réalisation de l'attelage où le bâti comporte un dispositif d'ajustement de la position du point d'accrochage qu'il porte;
- la figure 6 est une vue de dessus illustrant un premier mode de réalisation du bâti de l'attelage selon l'invention;
- les figures 7 et 8 sont respectivement des vues de dessus et de côté d'un mode de réalisation du premier dispositif d'accrochage;
- la figure 9 est une vue de côté d'un mode de réalisation de la barre d'attelage et des dispositifs d'accrochage qu'elle porte à ses extrémités, correspondants à ceux représentés sur les figures 7, 8 et 10;
- la figure 10 est une vue de dessus d'un mode de réalisation du deuxième dispositif d'accrochage et de ses moyens de montage sur l'apareil à remorquer;
- la figure 11 est une vue de dessus illustrant un deuxième mode de réalisation du bâti de l'attelage selon l'invention;
- la figure 12 est la vue en coupe indiquée en A-A sur la figure 11;
- la figure 13 est une vue de dessus illustrant un troisième mode de réalisation du bâti de l'attelage selon l'invention;
- les figures 14 et 16 sont les vues en coupe indiquées respectivement en C-C et B-B sur la figure 13;
- la figure 15 montre une portion d'un bras de liaison articulé sur le bâti représenté sur la figure 13, et un indicateur de position solidaire du bâti;
- la figure 17 représente un autre bras de liaison;
- la figure 18 illustre une variante du mode de réalisation des moyens de montage du premier dispositif d'accrochage représentés sur la figure 13.

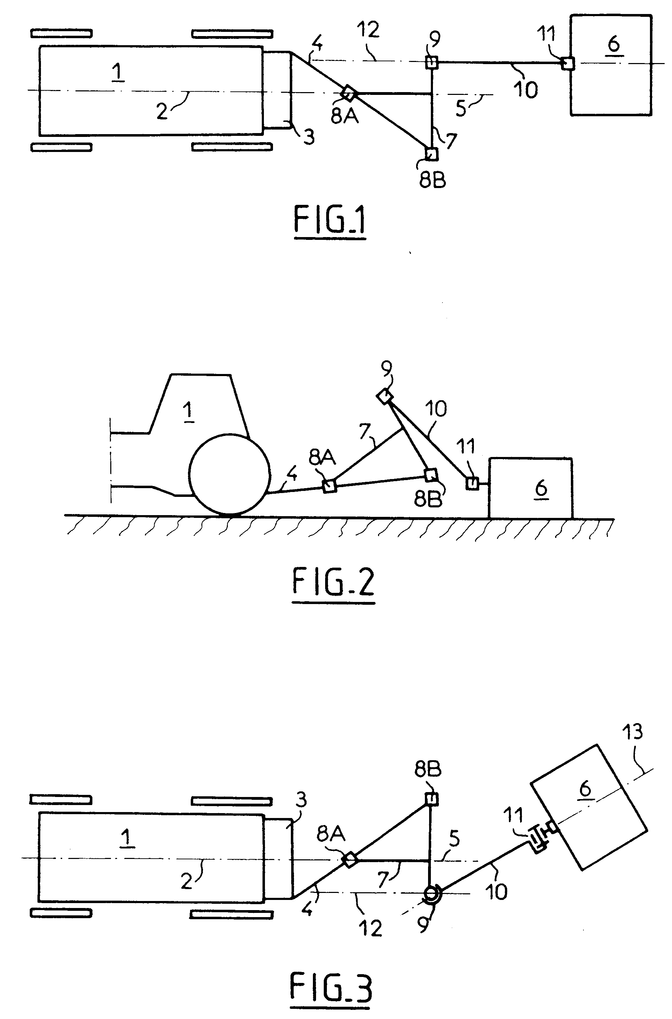

La figure 1 montre un tracteur 1 mobile sur un sol à travailler suivant un axe de déplacement 2, auquel est attelée une charrue brabant dont on a représenté très schématiquement un dispositif 3 d'attelage au tracteur et de commande de dévers et du retournement d'une partie mobile 4 de cette charrue.

Le retournement de la partie mobile 4 se fait autour d'un axe de retournement 5 sensiblement superposé à l'axe de déplacement 2 du tracteur, ces axes étant confondus ici, sur la figure 1 comme sur toutes les vues de dessus comportant ces deux axes.

Ce retournement fait passer la charrue d'une première position de travail représentée sur la figure 1 à une deuxième position de travail représentée sur la figure 3.

La partie mobile schématisée comporte une poutre porteuse de corps de labourage disposée, en position de travail, en oblique par rapport à l'axe de déplacement 2, l'angle entre un plan perpendiculaire au sol contenant cette poutre et l'axe de déplacement étant dit déport tandis que, dans ce plan, l' inclinaison de la poutre par rapport au sol est dite dévers.

Les corps de labourage sont installés le long de cette poutre en deux séries parallèles symétriques par rapport à la poutre, les corps de labourage d'une première série comportant des versoirs à droite, dans le sens du déplacement, cette première série travaillant le sol dans la position de travail de la charrue représentée sur la figure 1, tandis que la deuxième serie de corps de labourage comporte des versoirs à gauche et correspond à la position de travail représentée sur la figure 3.

La terre travaillée est ainsi versée d'un même côté par rapport à la partie pivotante 4 de la charrue dans ses deux positions de travail.

Un appareil à remorquer 6 est attelé à la charrue brabant par un système conforme à l'invention, qui comporte :

- un bâti 7 fixé à la partie pivotante de la charrue par des dispositifs 8A et 8B afin de supporter, du côté du versement de la terre, sensiblement dans un plan médian par rapport aux deux séries de corps de labourage, des moyens de montage d'un premier dispositif d'accrochage 9;

- une barre d'attelage 10 portant à une première extrémité des moyens de montage dudit premier dispositif d'accrochage 9, afin d'être reliée par ce dispositif au bâti 7, tandis qu'à une deuxième extrémité elle porte des moyens de montage d'un deuxième dispositif d'accrochage 11;

- des moyens de montage dudit deuxième dispositif d'accrochage 11 destinés à être fixés sur ledit appareil à remorquer 6, permettant de relier celui-ci à la barre d'attelage 10 par ledit deuxième dispositif d'accrochage 11.

Ainsi qu'indiqué précédemment, en bout de champ, il est nécessaire d'affecter un retournement de la charrue en faisant pivoter d'un demi-tour autour de l'axe de retournement 5 la partie pivotante 4 et notamment la poutre porteuse de corps de labourage. Pour effectuer cette manoeuvre de retournement, on actionne d'abord un dispositif de commande du dévers de la charrue afin de la relever par rapport au sol pour dégager les corps de labourage, on effectue le retournement de la partie pivotante, la position dans laquelle se trouve la charrue au milieu de cette phase de retournement étant montrée sur la figure 2, tandis que la fin du retournement est montré sur la figure 3, s'il avait débuté dans la position représentée sur la figure 1. Bien entendu, si l'on était parti de la position représentée sur la figure 3, la phase de retournement se terminerait par la position représentée sur la figure 1.

Le tracteur, après avoir effectué un demi-tour pour reprendre le travail dans le champ en sens inverse, met en prise les corps de labourage en réglant à nouveau le dévers, et plus précisément en abaissant la poutre 14.

Dans chacune des deux positions de travail de la charrue, la terre labourée est décalée dans le sens du versement, et est centrée autour d'un axe de labourage 12, le positionnement du dispositif d'accrochage 9 permettant à l'appareil à remorquer 6 de se centrer également sur l'axe de labourage.

Le positionnement du bâti permet également de ne pas avoir à se préoccuper de risques éventuels de rencontre du bâti avec le sol puisque le dispositif d'accrochage 9 passe en position haute lors du retournement, ainsi qu'exposé ci-dessus.

Pour permettre les changements de direction du tracteur, il faut bien entendu que le système d'attelage puisse permettre au tracteur et à l'appareil à remorquer d,avoir des directions de déplacement différentes. En outre, compte tenu du dévers variable de la charrue et de la grande longueur de celle-ci, il faut que le système puisse permettre des mouvements au cours desquels les moyens de montage du dispositif d'accrochage 9 puissent se lever et s'abaisser, ainsi que, compte tenu du retournement de la charrue, des mouvements au cours desquels lesdits moyens de montage puissent être retournés dessus-dessous.

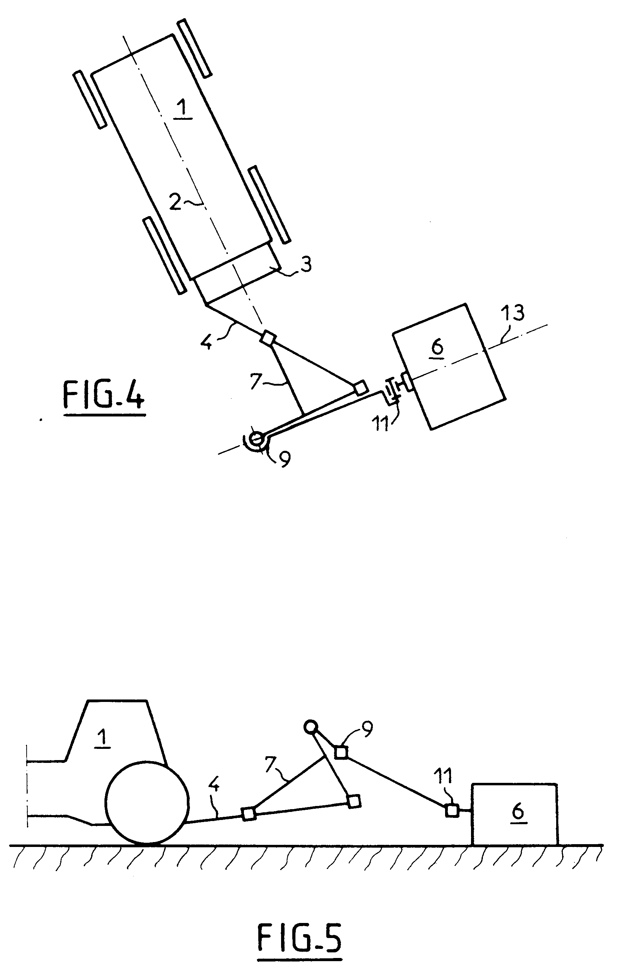

Selon une caractéristique de l'invention illustrée notamment par les figures 3 et 4, le premier dispositif d'accrochage 9 autorise un mouvement relatif à trois degrés de liberté en rotation entre le bâti 7 et la barre d'attelage 10, tandis que le deuxième dispositif d'accrochage 11 autorise entre la barre d'attelage 10 et l'appareil à remorquer 6 un mouvement relatif à un degré de liberté en rotation, autour d'un axe parallèle au sol et perpendiculaire à la direction de déplacement 13 prévue pour le déplacement de l'appareil à remorquer. En d'autres termes le dispositif d'accrochage 9 est une liaison du type rotule et le dispositif d'accrochage 11 est du type pivot.

Au cours du retournement de la charrue les deux dispositifs 9 et 11 vont se déformer, la barre d'attelage 10 va se soulever en même temps que le point d'accrochage du bâti, l'appareil à remorquer 6 se rapprochant par conséquent de la charrue tout en changeant de direction de déplacement, puis la barre 10 et le dispositif d'accrochage 9 se rabaisseront et l'appareil à remorquer s'éloignera de la charrue tout en continuant à changer de direction.

Conformément à une autre caractéristique de l'invention les moyens de montage du premier dispositif d'accrochage 9 sont disposés vers l'arrière de la charrue, et la barre d'attelage 10 a une longueur telle que la distance séparant les premier et deuxième dispositifs d'accrochage 9 et 11 est au moins égale à la distance comprise entre l'extrémité arrière de la charrue (portant ici les moyens de fixation 88) et les moyens de montage du dispositif 9 que porte le bâti 7.

Comme on le voit sur la figure 4, avec ces caractéristiques, l'angle entre les axes de déplacement du tracteur et de l'appareil à remorquer peuvent atteindre approximativement 90° lorsque le tracteur tourne du côté opposé à celui du versement de la terre, l'arrière de la charrue venant pratiquement contre la barre d'attelage. Le tracteur peut ainsi, après avoir retourné la charrue (figure 3), faire demi-tour sans risque de collision entre la charrue et l'appareil à remorque 6, sans qu'aucune réduction du rayon de braquage soit causée par l'appareil à remorquer.

Dans une variante avantageuse du système d'attelage selon l'invention, représentée schématiquement sur la figure 5, le bâti comporte un dispositif d'ajustement de la position des moyens de montage du dispositif d'accrochage 9, ce qui est particulièrement avantageux pour les charrues comportant un dispositif de réglage du déport car il permet de régler la position du dispositif d'accrochage 9, en cours de travail, afin que l'appareil à remorquer 6 reste centré sur l'axe de labourage. En outre, ainsi que représenté sur la figure 5, en rapprochant le dispositif 9 de l'arrière de la charrue, on évite lors du retournement que ce point atteigne une hauteur trop importante.

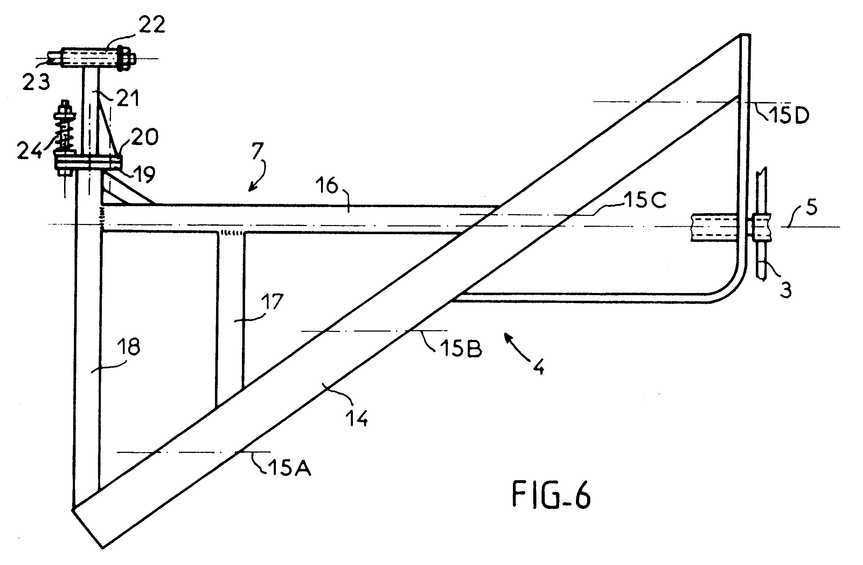

La figure 6 illustre de façon plus détaillée un premier mode de réalisation du bâti de l'attelage selon l'invention. Le dispositif 3, notamment d'attelage de la charrue, n'est représenté que partiellement, de même que la partie pivotante du brabant dont on a essentiellement représenté la poutre 14 porteuse des corps de labourage. Pour la clarté du dessin, ceux-ci ne sont pas représentés, on notera cependant que l'une des séries est située au-dessus du bâti et l'autre en dessous, et qu'ici chacune des séries comprend quatre corps de labourage centrés sur les axes 15A à 15D.

Dans ce mode de réalisation, le bâti comporte un longeron 16 prévu pour être parallèle à la direction de déplacement du tracteur en position de travail de la charrue, et des traverses 17 et 18 de longueurs inégales, du fait de la position en oblique de la poutre 14, sur laquelle sont fixés ces traverses et longerons.

Le longeron 18 se prolonge au-delà de l'axe de retournement de la charrue et porte à son extrémité libre un disque de montage 19 destiné à coopérer avec un autre disque de montage 20 que porte un bras 21 à l'une de ses extrémités tandis qu'il porte à l'autre extrémité des moyens 22 de montage du premier dispositif d'accrochage, ces moyens 22 étant ici un tube de montage à rotation d'un arbre 23 d'axe parallèle à celui prévu pour le déplacement de la charrue. La liaison entre la traverse 18 et le bras 21 se fait par des boulons à ressorts 24 dont un seul est représenté sur la figure 6. Les disques 19 et 20 peuvent ainsi s'écarter à l'encontre des ressorts qui jouent ainsi un rôle d'amortisseur.

Bien entendu, on place l'axe du tube de montage 22 au-dessus de l'axe de labourage prévu pour être obtenu par cette charrue.

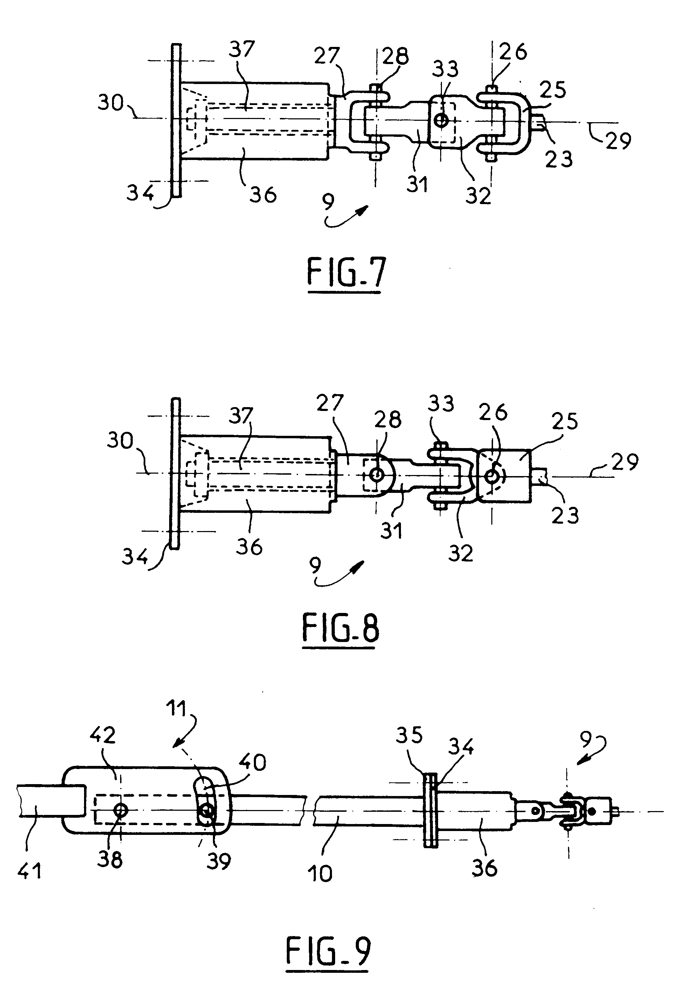

Sur la tube de montage 22 on monte le premier dispositif d'accrochage 9 dont un mode de réalisation est montré sur les figures 7 et 8.

Conformément à une caractéristique avantageuse de l'invention le dispositif d'accrochage 9 comporte deux chapes 25 et 27 de support d'un axe d'articulation, respectivement 26 et 28, reliées entre elles, destinées chacune à être montée à rotation, respectivement sur le bâti 7 et sur la barre d'attelage 10, autour d'un axe coupant perpendiculairement celui de l'axe d'articulation qu'elles sont destinées à supporter, respectivement autour des axes 29 et 30, confondus sur les figures.

Grâce au montage à rotation de ces chapes, le bâti 7 et la barre d'attelage 10 peuvent avoir des mouvements relatifs tels que celui à la fin duquel l'un des éléments se retrouve dessus-dessous par rapport à l'autre. La liaison entre les chapes 25 et 27 doit permettre d'obtenir les autres degrés de liberté nécessaires au bon fonctionnement de l'attelage. Cette liaison peut être réalisée par de nombreux dispositifs, par exemple une simple chaîne, relativement courte et résistante afin de supporter non seulement les efforts de traction mais aussi les efforts de torsion pouvant se produire, et peut aussi être un croisillon rassemblant les axes 26 et 28 (le dispositif 9 serait alors un joint de Cardan), ou encore une entretoise telle que l'entretoise 31, munie de deux alésages à axes perpendiculaires non concourrants pour le montage d'axes d'articulation, cette entretoise étant montée sur les axes 28 et 26, ou encore l'ensemble de liaisons représenté sur les figures 7 et 8 qui comprend en outre une chape intermédiaire 32 de support d'un axe d'articulation 33, munie pour son montage d'un alésage d'axe perpendiculaire et non sécant à l'axe 33.

Comme on le voit, l'entretoise 31 est montée sur l'axe d'articulation 28 portée par la chape 27 et sur l'axe d'articulation 33 porté par la chape intermédiaire 32, celle-ci étant également montée sur un axe d'articulation 26 porté par la chape 25, les chapes 25 et 27 étant ainsi reliées par un dispositif articulé, maintenant parallèles les axes 26 et 28 qu'elles portent. On notera que l'axe 33 reste perpendiculaire à ces deux axes.

On remarquera qu'une rotation autour de l'axe 33 permet notamment une différence dans la direction de déplacement du tracteur et de l'appareil à remorquer, lorsque l'ensemble est dans la position représentée sur la figure 7, et qu'une translation circulaire de la chape 25 par rapport à la chape 27 (ou vice-versa) est possible grâce aux rotations qui peuvent se faire autour des axes 28 et 26.

L'arbre 23 de la chape 25 est monté tournant dans le tube de montage 22 du bâti représenté sur la figure 6 ou dans des dispositifs similaires des moyens de montage prévus dans d'autres modes de réalisation.

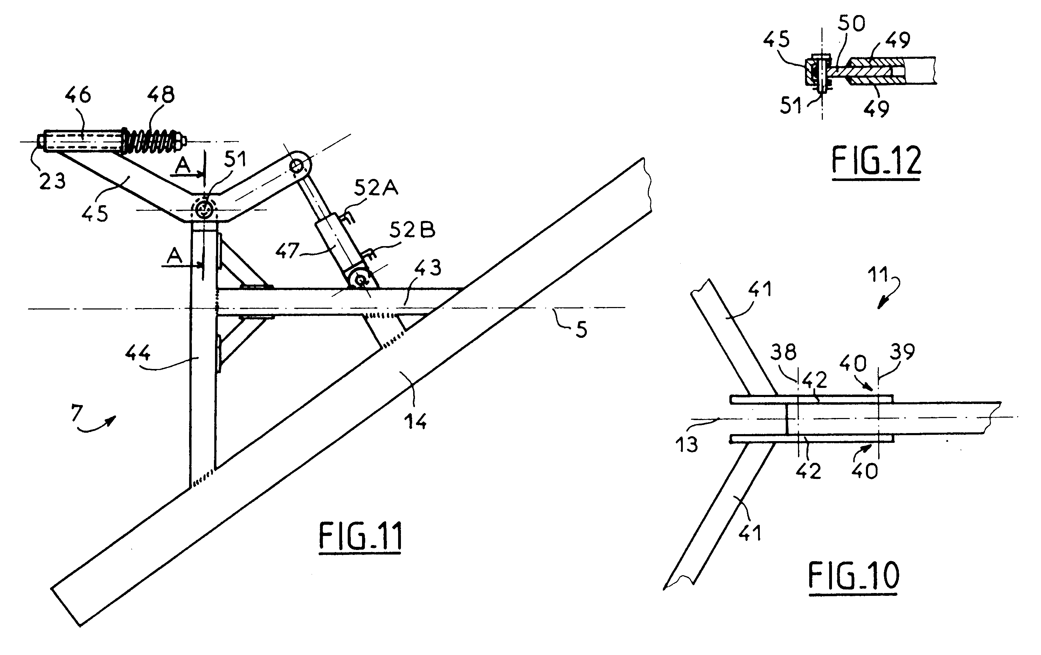

La figure 9 montre le montage du dispositif d'accrochage 9 représenté sur les figures 7 et 8. La barre d'attelage 10 comporte un disque 35 de montage d'un disque 34 d'un support 36 de montage à rotation de l'arbre 37 porté par la chape 27. L'autre extrémité de la barre d'accrochage 10 porte des moyens de montage du deuxième dispositif d'accrochage, représentés sur la figure 10 en vue de dessus. Sur l'appareil à remorquer les moyens de montage de ce dispositif d'accrochage 11 sont disposés de façon à ce qu'ils soient situés au voisinage d'un plan perpendiculaire au sol contenant l'axe de déplacement 13 prévu pour ledit appareil. Dans ce mode de réalisation, le deuxième dispositif d'accrochage 11 comporte deux axes 38 et 39 montés perpendiculairement à la direction de dépla- cement, parallèlement au sol, l'axe 38 étant un axe d'articulation entre l'appareil à remorquer 6 et la barre d'attelage 10 tandis que l'axe 39 est monté dans un alésage de la barre, en avant de l'axe 38, et coopère avec une lumière 40 solidaire de l'appareil 6, cette lumière ayant la forme d'une portion de cercle centrée sur l'axe de l'axe d'articulation 38, afin de limiter à cette portion la rotation relative de l'appareil 6 et de la barre 10. Cette limitation est particulièrement avantageuse dans le cas où l'appareil à remorquer est monté sur un seul essieu, et s'il est nécessaire que sa rotation autour de cet essieu soit limitée.

Dans le mode de réalisation représenté les moyens de montage du deuxième dispositif d'accrochage 11 comportent deux barres 41 fixées sur l'appareil à remorquer, auxquelles sont fixées deux plaques 42 entre lesquelles est montée la barre 10, ces plaques 42 portant les alésages de montage de l'axe 38 et la lumière 40.

La figure 11 montre un deuxième mode de réalisation du bâti du système d'attelage conforme à l'invention. Le bâti comporte ici un longeron 43 et une traverse 44 fixés sur la poutre 14 porteuse des corps de labourage, un bras 45 portant des moyens de montage 46 du dispositif d'accrochage 9 étant articulé à l'extrémité libre de la traverse 44, ce bras étant commandé par un vérin 47 articulé sur ce bras 45 et sur le bâti 7 et plus précisément sur le longeron 43.

Le bras 45 a sensiblement la forme d'un V articulé à sa pointe sur la traverse 44, l'une de ses extrémités portant les moyens de montage 46, ici un tube similaire au tube 22, et à l'autre extrémité du V est articulé le vérin 47. On notera que le vérin 47 est représenté ici avec sa tige à mi-course, la sortie de la tige rapprochant de l'axe de retournement les moyens 46 de montage du premier dispositif d'accrochage tandis que la rentrée de la tige les en éloignent. On monte avantageusement sur le dispositif de montage 46 un premier dispositif d'accrochage du type décrit précédemment à l'appui des figures 7 et 8, le rôle d'amortisseur étant ici joué par un ressort 48 disposé coaxialement à l'arbre 23 de façon à exercer une force élastique le long de son axe.

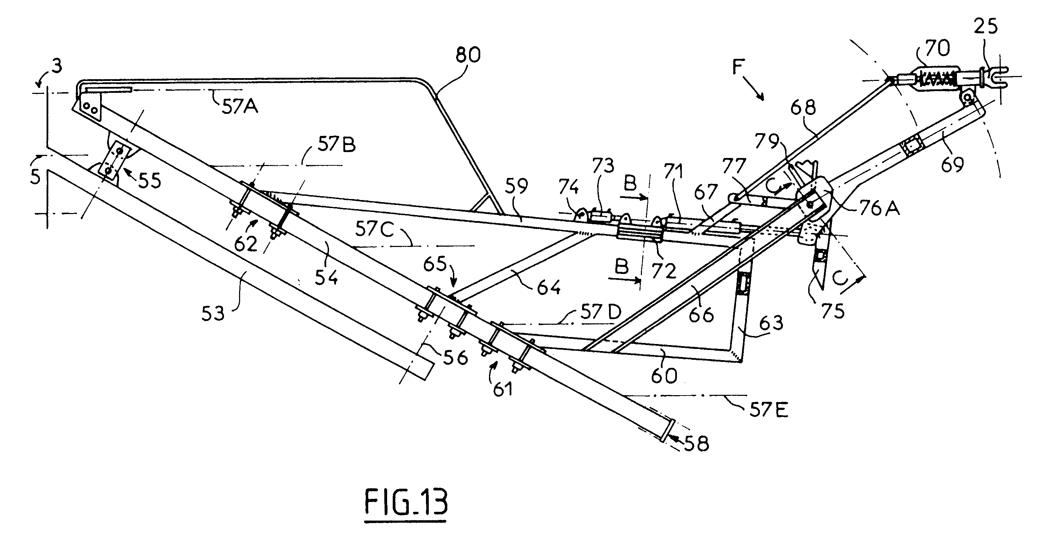

La figure 12 montre les détails de réalisation de l'articulation du bras 45 sur la traverse 44 : le bras 45 est réalisé par deux fers plats entre lesquels on soude, à l'extrémité du bras, une patte 50 dans laquelle on ménage un alésage de montage d'un axe d'articulation 51 pour le bras 45.

Le vérin 47 est relié au circuit hydraulique du tracteur par des flexibles 52A et 52B afin d'ajuster de la manière souhaitée la position de l'appareil à remorquer au cours du travail, ou la hauteur du point d'accrochage au retournement, ainsi qu'il l'a été expliqué précédemment.

La figure 13 montre un troisième mode de réalisation du bâti de l'attelage selon l'invention.

La charrue qui y est représentée très schématiquement a une partie pivotante autour de l'axe de retournement 5 qui comporte deux poutres en oblique par rapport à l'axe de retournement : une poutre 53 solidaire du dispositif, notamment d'attelage, 3, sur laquelle est montée une poutre 54 porteuse de corps de labourage, d'une part par un dispositif d'articulation 55 et d'autre part par une liaison réglable 56 (non représentée), le réglage de cette liaison permettant de régler le déport de la charrue. La poutre 54 est prévue pour le montage de cinq corps de labourage aux emplacements indiqués par les axes 57A à 57E, un sixième corps de labourage étant fixé directement à l'extrémité 58 de la poutre 54.

Le bâti comporte ici deux longerons 59 et 60 fixés sur la poutre 54 par des brides 61 et 62, ces longerons étant réunis par une traverse 63. Une poutre 64 placée en biais est fixée sur le longeron 59 et montée sur la poutre 54 par des brides 65.

Deux autres poutres en biais 66 et 67 sont solidarisées au bâti de façon à avoir leurs extrémités libres sensiblement alignées parallèlement à l'axe de retournement. Un parallélogramme articulé est monté sur ces extrémités libres, et comporte deux bras de liaison 68 et 69 articulés à une première extrémité, tandis qu'à une deuxième extrémité ils sont articulés, à égale distance de cette première articulation, sur un bras 70 porteur des moyens de montage du premier dispositif d'accrochage 9.

Du fait de ce montage en parallélogramme, le bras 70 a une position qui peut être ajustée en déformant le parallélogramme, ce montage en parallélogramme offrant l'avantage de garder le bras 70 sensiblement parallèle à l'axe de retournement ou, en d'autres termes, dans le prolongement de la barre d'attelage 10.

Comme la plupart des charrues brabants, la charrue illustrée comporte un dispositif de retournement (non représenté) comportant un vérin de retournement ayant une tige se trouvant dans une première position extrême (par exemple sortie) lorsque la charrue est en position de travail, tandis qu'une phase de passage de la tige vers une deuxième position extrême (par exemple rentrée) puis une phase de passage vers ladite première position de la tige (par exemple sortie) s'effectue au cours d'un retournement.

L'ajustement du bras 70 est commandé par un vérin 71 articulé sur un prolongement du bras 69, ainsi que sur un coulisseau 72 glissant le long du longeron 59, ce glissement étant commandé par un vérin 73 articulé sur une chape 74 montée sur le longeron 59.

Le vérin 71 est connecté au vérin de retournement de façon à ce qu'ils soient actionnés simultanément, la phase de passage de la position tige sortie (position de travail de la charrue) vers la position tige rentrée de ce vérin (au milieu du retournement), selon l'exemple précédent, correspond à une phase de rapprochement des moyens de montage du premier dispositif de montage vers l'axe de retournement, c'est-à-dire à une rentrée de tige du vérin 71, et vice-versa. Le vérin 73 quant à lui est relié au circuit hydraulique du tracteur et est commandé par l'uti- lisateur grâce à un tiroir de distribution habituel. Ce montage est particulièrement avantageux car, au cours du retournement, on a automatiquement un ajustement de la position du bras 70 qui permet d'éviter qu'il atteigne une position trop haute au milieu du retournement, et ceci sans aucune intervention de l'utilisateur. En outre, à la fin du retournement, le vérin 71 reprend une position similaire à celle qu'il avait avant que commence le retournement, ce qui fait qu'on conserve le réglage de la distance du bras 70 par rapport à l'axe de retournement de la charrue après un retournement.

Bien entendu ce réglage a été effectué grâce au vérin 73 qui actionne le coulisseau, actionnant lui-même le vérin 71 qui garde une longueur constante en dehors de la phase de retournement.

Pour faciliter le passage des flexibles hydrauliques connectés aux vérins 73 et 71, un support 80 est prévu entre le bâti et l'extrémité avant de la poutre 54.

On notera qu'une butée 75 est montée sur le bras 69, afin de limiter les mouvements du parallélogramme, lorsque la butée 75 vient contre la traverse 63. Cette butée est avantageuse, notamment en cas de choc, car c'est elle qui supporte l'effort et l'on évite ainsi des risques de dégradations des vérins 71 ou 73.

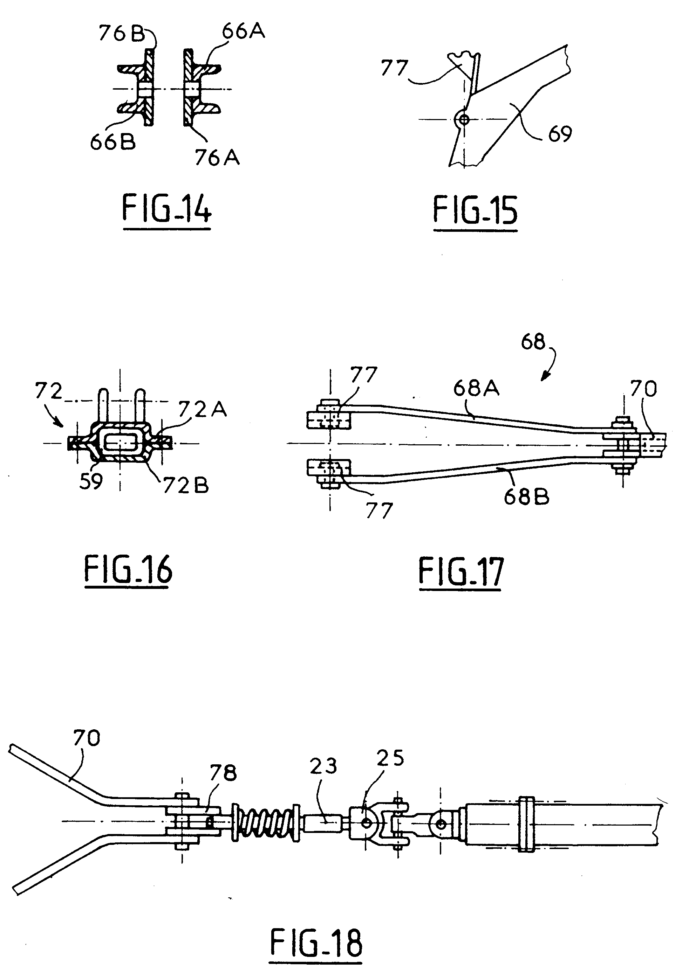

Ainsi qu'on le voit sur la figure 14, le bras 66 comporte deux profilés en U, 66A et 66B fixés de part et d'autre du longeron 60 et de l'angle entre le longeron 59 et la traverse 63, des plaques 76A et 76B étant interposées entre chacun de ces profilés et le bras 69 à l'extrémité de la barre où est articulé le bras. Ces plaques offrent l'avantage d'augmenter la surface d'appui du bras 69 sur le bâti dans le voisinage de son articulation.

La figure 15 montre une portion du bras 69 et en particulier son alésage d'articulation sur la barre 66, et illustre également un repère de position 77 solidaire du bâti, portant des encoches visibles depuis la cabine du tracteur, qui permet à l'utilisateur de visualiser le positionnement du bras 70 grâce à un index 79 solidaire de ce bras.

La figure 16 montre le coulisseau 72, qui comporte deux flasques 72A et 72B montées de part et d'autre du longeron 59, cette structure du coulisseau étant avantageuse car elle permet de le monter aisément sur le bâti.

La figure 17 montre le bras 68 vu selon la flèche F indiquée sur la figure 13. Ce bras comporte deux demi-bras 68A et 68B montés d'une part sur un profilé en U 77 et d'autre part sur les moyens de montage 70. L'espace ménagé entre ces bras permet en particulier que le bras 68 puisse passer autour du profilé 77 et même de l'extrémité de la poutre 66.

De même que pour les modes de réalisation exposés précédemment les moyens de montage 70 sont prévus pour le montage d'un arbre tel que l' arbre 23 du mode de réalisation du premier dispositif d'accrochage représenté sur les figures 7 et 8, un ressort amortisseur étant prévu dans ce montage, à l'intérieur même des moyens 70 dans le mode de réalisation représenté sur la figure 13, et dans la variante représentée sur la figure 18 à l'extérieur, ce qui permet de prévoir une articulation supplémentaire 78 avant le ressort amortisseur, ce qui est avantageux pour le comportement du premier dispositif d'accrochage lorsqu'il subit des déformations.

**Revendications**

1. Système d'attelage à servant à atteler un appareil agricole à remorquer (6) à une charrue brabant, une telle charrue étant prévue pour être attelée elle-même à un tracteur (1) se déplaçant sur un sol à travailler suivant un axe de déplacement (2), cette charrue comportant une partie prévue pour être pivotante d'un demi-tour entre deux positions de travail, autour d'un axe de retournement (5) sensiblement superposé à l'axe de déplacement du tracteur, cette partie pivotante comportant des corps de labourage disposés en deux séries parallèles symétriques, les corps de labourage d'une première desdites séries comportant des versoirs à droite, dans le sens du déplacement, tandis qu'une deuxième desdites séries de corps de labourage comporte des versoirs à gauche, la terre travaillée étant ainsi versée d'un même côté par rapport à la partie pivotante (4) dans les deux positions de travail de la charrue ; ledit système d'attelage comportant :

- un support (7) destiné à être fixé sur la partie pivotante (4) de la charrue afin de supporter, sensiblement dans un plan médian par rapport aux deux séries de corps de labourage, des moyens de montage d'un premier dispositif (9) d'accrochage ;
- une barre (10) d'attelage portant à une première extrémité des moyens de montage dudit premier dispositif d'accrochage, afin d'être reliée par celui-ci audit support, tandis qu'à une deuxième extrémité elle porte des moyens de montage d'un deuxième dispositif (11) d'accrochage ;
- des moyens de montage dudit deuxième dispositif d'accrochage destinés à être fixés sur ledit appareil à remorquer (6), permettant de relier celui-ci à la barre d'attelage (10) par ledit deuxième dispositif d'accrochage ;

le premier dispositif d'accrochage étant déformable afin de permettre à l'appareil à remorquer d'avoir une direction de déplacement (13) différente de celle du tracteur, ainsi que d'autoriser des mouvements desdits moyens de montage portés par le support au cours desquels ils puissent s'élever et s'abaisser, ce premier dispositif d'accrochage comportant une chape (27) faisant monture pour un axe (28) d'articulation, destinée à être montée à rotation autour d'un axe (30) coupant perpendiculairement celui dudit axe (28) d'articulation, sur lesdits moyens de montage que comporte le support pour le premier dispositif d'accrochage, suivant un axe disposé de telle sorte que ces moyens de montage puissent être retournés dessus-dessous ;

- le premier dispositif d'accrochage comporte cette chape (27), dite première chape, qui fait monture pour un axe d'articulation (28) ayant un axe coupant perpendiculairement celui autour duquel elle est destinée à être montée à rotation, en outre de la chape (25) destinée à être montée à rotation sur le support, dite deuxième chape, ainsi que des moyens de liaison (26, 32, 33, 31, 28) entre lesdites première chape (27) et deuxième chape (25) ;

ce système d'attelage étant caractérisé en ce que :

le deuxième dispositif d'accrochage reliant l'appareil à remorquer (6) et la barre d'attelage (10) de telle sorte que celle-ci puisse pivoter autour d'un axe parallèle au sol et perpendiculaire à la direction prévue pour le déplacement dudit appareil ;

- le deuxième dispositif d'accrochage (11) est (10) et l'appareil à destiné à relier la barre d'attelage (10) et l'appareil à remorquer (6) de telle sorte que la barre (10) soit disposée parallèlement à la direction de déplacement (13) prévue pour l'appareil ;
- les moyens de montage du premier dispositif d'accrochage (9) que porte la barre d'attelage (10) comportent des moyens (36) de montage à rotation d'une chape (27) coaxialement à la barre ;
- ledit support est un bâti (7) prévu pour supporter lesdits moyens de montage du premier dispositif d'accrochage (22, 46, 70), du côte du versement de la terre.

2. Système selon la revendication 1, caractérisé en ce que lesdites première et deuxième chapes (25, 27) sont reliées par :

- une entretoise (31) munie de deux alésages à axe perpendiculaires et non sécants pour le montage d'axes d'articulation ;
- une chape (32) intermédiaire de support d'un axe d'articulation (33) munie, pour son montage, d'un alésage d'axe perpendiculaire et non sécant à celui de l'axe d'articulation qu'elle porte ;

ladite entretoise (31) étant montée sur un axe d'articulation (28) porté par une première desdites chapes reliées (27) et sur un axe d'articulation (33) porté par la chape intermédiaire, celle-ci étant également montée sur un axe d'articulation (26) porté par la deuxième desdites chapes reliées (25).

3. Système selon la revendication 1, caractérisé en ce que lesdites première et deuxième chapes (25, 27) sont reliées par une chaîne, par un croisillon, ou par une entretoise munie de deux alésages à axes perpendiculaires non concourrants pour le montage d'axes d'articulation, cette entretoise étant montée sur les axes d'articulation (26, 28) dont lesdites première et deuxième chapes (25, 27) font monture.

4. Système selon l'une quelconque des revendications 1 à 3, caractérisé en ce que le deuxième dispositif d'accrochage (11) autorise entre ladite barre d'attelage (10) et ledit appareil à remorquer (6) un mouvement relatif à un degré de liberté en rotation, autour d'un axe sensiblement parallèle au sol et perpendiculaire à la direction prévue pour le déplacement de l'appareil à remorquer.

5. Système selon la revendication 4, caractérisé en ce que les moyens de montage dudit deuxième dispositif d'accrochage (11) sont disposés sur l'appareil à remorquer (6) de façon à ce que ce dispositif soit situé au voisinage d'un plan perpendiculaire au sol contenant l'axe de déplacement prévu pour ledit appareil, ledit deuxième dispositif d'accrochage comportant deux axes (38, 39) destinés à être montés perpendiculairement à l'axe de déplacement prévu pour l'appareil (6), parallèlement au sol, un premier de ces axes (38) étant un axe d'articulation entre l'appareil à remorquer (6) et la barre d'attelage (10) tandis qu'un deuxième axe (39) est monté en avant du premier dans un alésage de la barre et coopère avec une lumière (40) solidaire de l'appareil, ayant la forme d'une portion de cercle centrée sur l'axe dudit premier axe d'articulation, afin de limiter à cette portion la rotation relative de l'appareil et de la barre.

6. Système selon l'une quelconque des revendications 1 à 5, caractérisé en ce que les moyens de montage dudit premier dispositif d'accrochage (9) sont disposés vers l'arrière de la charrue, et en ce que ladite barre d'attelage (10) a une longueur telle que la distance séparant lesdits premier et deuxième dispositifs d'accrochage (9, 11) est au moins égale à la distance comprise entre l'extrémité arrière de la charrue et lesdits moyens de montage du premier dispositif d'accrochage que porte le bâti.

7. Système selon l'une quelconque des revendications 1 à 6, caractérisé en ce que ledit bâti (7) comporte un dispositif d'ajustement de la position des moyens de montage dudit premier dispositif d'accrochage (9).

8. Système selon la revendication 7, caractérisé en ce que ledit dispositif d'ajustement comporte un bras (45, 69) portant lesdits moyens de montage du premier dispositif d'accrochage (9), articulé sur le bâti (7), commandé par un vérin (47, 71) articulé sur ce bras.

9. Système selon l'une quelconque des revendications 7 ou 8, caractérisé en ce que ledit dispositif d'ajustement comporte un parallélogramme articulé comportant deux bras de liaison (68, 69) articulés chacun sur le bâti (7) à une première extrémité, tandis qu'à une deuxième extrémité ils sont articulés, à égale distance, sur un bras (70) porteur des moyens de montage du premier dispositif d'accrochage (9).

10. Système selon l'une quelconque des revendications 7 à 9, caractérisé, ladite charrue comportant un dispositif de retournement comportant un vérin de retournement ayant une tige se trouvant dans une première position extrême lorsque la charrue est en position de travail tandis qu'une phase de passage de la tige vers une deuxième position extrême puis une phase de passage vers ladite première position de la tige s'effectue au cours d'un retournement, en ce que le dispositif d'ajustement comporte un vérin (71) de commande actionné simultanément avec ledit vérin de retournement, une phase de passage de la première vers la deuxième position extrême du vérin de retournement correspondant à une phase de rapprochement des moyens de montage du premier dispositif de montage vers l'axe de retournement (5) et vice-versa, ledit vérin de commande étant relié au bâti (7) par l'intermédiaire d'un coulisseau (72) mis en mouvement par un vérin d'ajustement (73).

**Claims**

1. Hitch system serving to hitch an item of agricultural equipment to be towed (6) to a two-way turnover plough, such a plough being provided in order to be itself hitched to a tractor (1) travelling over the soil to be worked along a line of travel (2), this plough comprising a portion provided in order to pivot through a half turn between two work positions, about a turning axis (5) substantially superposed on the line of travel of the tractor, this pivoting part comprising ploughing bodies arranged in two symmetrical parallel series, the ploughing bodies of a first of the said series comprising right-hand mouldboards, in the direction of the travel, while a second of the said series of ploughing bodies comprises left-hand mouldboards, the worked earth thus being turned on one and the same side in relation to the pivoting part (4) in the two work positions of the plough; the said hitch system comprising:

- a support (7) intended to be fixed to the pivoting part (4) of the plough so as to support, substantially in a median piano in relation to the two series of ploughing bodies, means for mounting a first coupling device (9);
- a hitch bar (10) carrying at a first end means for mounting the said first coupling device, so as to be connected by the latter to the said support, while at a second end it carries means for mounting a second coupling device (11);
- means for mounting the said second coupling device, which are intended to be fixed to the said equipment to be towed (6), making it possible to connect the latter to the hitch bar (10) by the said second coupling device;
- the first coupling device being deformable so as to permit the equipment to be towed to have a direction of travel (13) different from that of the tractor, and to allow movements of the said mounting means carried by the support during which they can be raised and lowered, this first coupling device comprising a clevis (27) forming a fitting for an articulation pin (28), which clevis is intended to be mounted for rotation about an axis (30) cutting that of the said articulation pin (28) perpendicularly, on the said mounting means which the support for the first coupling device comprises, along an axis disposed in such a manner that these mounting means may be turned upside down;
- the first coupling device comprises this clevis (27), called first clevis, which forms the fitting for an articulation pin (28) having an axis cutting perpendicularly the one around which it is intended to be mounted for rotation, in addition to the clevis (25) which is intended to be mounted for rotation on the support, called second clevis, together with linkage means (26, 32, 33, 31, 28) between the said first clevis (27) and second clevis (25);
- this hitch system being characterised in that:

    the second coupling device connecting the equipment to be towed (6) and the hitch bar (10) in such a manner that the latter may pivot about an axis parallel to the ground and perpendicular to the direction provided for the travel of the said equipment;

- the second coupling device (11) is intended to connect the hitch bar (10) and the equipment to be towed (6) in such a manner that the bar (10) is disposed parallel to the direction of travel (13) provided for the equipment;
- the means for mounting the first coupling device (9), which the hitch bar (10) carries, comprise mounting means (36) for rotation of a clevis (27) coaxially with the bar;
- the said support is a frame (7) provided in order to support the said means for mounting the first coupling device (22, 46, 70) on the side on which the earth is turned over.

2.   System according to Claim 1, characterised in that the said first and second cleves (25, 27) are connected by:

- a tie (31) provided with two bores having perpendicular and non-intersecting axes for the mounting of articulation pins;
- an intermediate clevis (32) for supporting an articulation pin (33) provided, for its mounting, with a bore of axis perpendicular to and not intersecting that of the articulation pin which it carries;

    the said tie (31) being mounted on an articulation pin (28) carried by a first (27) of the said connected cleves and on an articulation pin (33) carried by the intermediate clevis, the latter also being mounted on an articulation pin (26) carried by the second (25) of the said connected cleves.

3.   System according to Claim 1, characterised in that the said first and second cleves (25, 21) are connected via a chain, via a cross piece, or via a tie equipped with two bores having non-coinciding perpendicular axes for the mounting of articulation pins, this tie being mounted on the articulation pins (26, 28) for which the first and second clevis (25, 27) form a fitting.

4.   System according to any one of Claims 1 to 3, characterised in that the second coupling device (11) allows a relative movement having one degree of rotational freedom between the said hitch bar (10) and the said equipment to be towed (6), about an axis substantially parallel to the soil and perpendicular to the direction provided for the travel of the equipment to be towed,

5. System according to Claim 4, characterised in that the means for mounting the said second coupling devise (11) are disposed on the equipment to be towed (6) in such a manner that this device is located in the vicinity of a plane perpendicular to the soil containing the line of travel provided for the said equipment, the said second coupling device comprising two pins (38, 39) which are intended to be mounted perpendicularly to the line of travel provided for the equipment (6), parallel to the soil, a first of these pins (38) being an articulation pin between the equipment to be towed (6) and the hitch bar (10) while a second pin (39) is mounted in front of the first in a bore of the bar and engages in a slot (40) integral with the equipment, having the shape of a portion of a circle centred on the axis of the said first articulation pin, so as to limit the rotation, relative to the equipment and to the bar, to this portion.

6. System according to any one of Claims 1 to 5, characterised in that the means for mounting the said first coupling device (9) are disposed towards the rear of the plough, and in that the said hitch bar (10) has a length such that the distance separating the first and second coupling devices (9, 11) is not less than the distance between the rear end of the plough and the said means for mounting the first coupling device which the frame carries.

7. System according to any one of Claims 1 to 6, characterised in that the said frame (7) comprises a device for adjusting the position of the means for mounting the said first coupling device (9).

8. System according to Claim 7, characterised in that the said adjusting device comprises an arm (45, 69) carrying the said means for mounting the first coupling device (9), articulated to the frame (7), controlled by a cylinder (47, 71) articulated to this arm.

9. System according to either of Claims 7 and 8, characterised in that the said adjusting device comprises an articulated parallelogram comprising two linkage arms (68, 69) each articulated to the frame (7) at a first end, while at a second end they are articulated, at equal distance, to an arm (70) carrying the means for mounting the first coupling device (9).

10. System according to any one of Claims 7 to 9, characterised, the said plough comprising a turning device comprising a turning cylinder having a rod which is in a first extreme position when the plough is in a work position while a phase in which the rod passes towards a second extreme position and then a phase in which the rod passes towards the said first position is effected during a turning operation, in that the adjusting device comprises a control cylinder (71) actuated simultaneously with the said turning cylinder, a phase in which the turning cylinder passes from the first towards the second extreme position corresponding to a phase in which the means for mounting the first mounting device move towards the turning axis (5) and vice versa, the said control cylinder being connected to the frame (7) via a slide (72) set in motion by an adjusting cylinder (73).

**Patentansprüche**

1. Kupplungssystem zur Anbringung eines landwirtschaftlichen Zusatzgeräts (6) an einen Drehpflug, der seinerseits an einen sich auf dem zu bearbeitenden Boden in einer Bewegungsachse (2) bewegenden Schlepper (1) angehängt werden soll und einen Teil besitzt, der in einer halben Umdrehung um eine der Bewegungsachse des Schleppers im wesentlichen überlagerte Wendeachse (5) zwischen zwei Arbeitsstellungen schwenkbar ist und in zwei parallelen, symmetrischen Reihen angeordnete Pflugkörper besitzt, wobei die Pflugkörper der ersten Reihe in Bewegungsrichtung nach rechts gerichtete Streichbleche und die Pflugkörper der zweiten Reihe nach links gerichtete Streichbleche aufweisen, so daß die bearbeitete Erde in den beiden Arbeitsstellungen des Pflugs bezüglich des schwenkbaren Teils (4) auf dieselbe Seite geworfen wird, wobei das Kupplungssystem

- einen Träger (7), der am schwenkbaren Teil (4) des Pflugs so befestigt werden soll, daß er im wesentlichen in einer zwischen den beiden Pflugkörperreihen verlaufenden Mittelebene Einrichtungen zur Montage einer ersten Einhängevorrichtung (9) trägt,
- eine Kuppelstange (10), die an einem Ende Einrichtungen zur Montage der ersten Einhängevorrichtung trägt, um über diese mit dem Träger verbunden zu werden, während sie am anderen Ende Einrichtungen zur Montage einer zweiten Einhängevorrichtung (11) trägt, und
- Einrichtungen zur Montage der zweiten Einhängevorrichtung besitzt, die an dem Zusatzgerät (6) befestigt werden sollen und dessen Verbindung mit der Kuppelstange (10) über die zweite Einhängevorrichtung gestatten,

wobei die erste Einhängevorrichtung verformbar ist, um dem Zusatzgerät eine Bewegungsrichtung (13) zu ermöglichen, die von der des Schleppers abweicht, und Bewegungen der von dem Träger getragenen Montageeinrichtungen zuzulassen, in deren Verlauf diese sich heben und senken können, wobei die erste Einhängevorrichtung eine Gabel (27) aufweist, die eine Drehachse (28) trägt und drehbar um eine Achse (30), die die Achse der Drehachse (28) im rechten Winkel schneidet, an den Montageeinrichtungen montiert werden soll, die an dem Träger für die erste Einhängevorrichtung vorgesehen sind, und zwar in einer Achse, die so angeordnet ist, daß die Montageeinrichtungen umgewendet werden können, und die erste Einhängevorrichtung die Gabel (27), erste Gabel genannt, die eine Drehachse (28) trägt, deren Achse die Achse, um welche die Gabel drehbar montiert werden soll, im rechten Winkel schneidet, und zwar abgesehen von der Gabel (25), zweite Gabel genannt, die drehbar an dem Träger montiert werden soll, sowie Verbindungseinrichtungen (26, 32, 33, 31, 28) zwischen der ersten Gabel (27) und der zweiten Gabel (25) aufweist,
dadurch gekennzeichnet,
daß die zweite Einhängevorrichtung das Zusatzgerät (6) mit der Kuppelstange (10) so verbindet, daß diese sich um eine Achse drehen kann, die zum Boden parallel und zu der für die Bewegung des Zusatzgeräts vorgesehenen Richtung senkrecht ist, daß die zweite Einhängevorrichtung (11) die Kuppelstange (10) mit dem Zusatzgerät (6) so verbinden soll, daß die Stange (10) parallel zu der für das Zusatzgerät vorgesehenen Bewegungsrichtung (13) angeordnet ist, daß die Montageeinrichtungen der ersten Einhängevorrichtung (9), die die Kuppelstange (10) trägt, Einrichtungen (36) zur drehbaren Montage einer Gabel (27) koaxial zur Stange besitzen, und daß der Träger ein Gestell (7) ist, das so ausgebildet ist, daß es die Montageeinrichtungen der ersten Einhängevorrichtung (22, 46, 70) auf der Seite, auf der die Erde umgebrochen wird, tragen kann.

2. Kupplungssystem nach Anspruch 1, dadurch gekennzeichnet, daß die erste Gabel (25) und die zweite Gabel (27) durch ein Zwischenstück (31), das zwei zueinander senkrechte und sich nicht schneidende Bohrungen zur Montage von Drehachsen besitzt, und durch eine Zwischengabel (32) miteinander verbunden sind, die eine Drehachse (33) trägt und für ihre Montage eine Bohrung aufweist, deren Achse zur Achse der von ihr getragenen Drehachse senkrecht ist und diese nicht schneidet, wobei das Zwischenstück (31) an einer von der ersten (27) der miteinander verbundenen Gabeln getragenen Drehachse (28) und an einer von der Zwischengabel getragenen Drehachse (33) montiert ist, wobei die Zwischengabel außerdem an einer von der zweiten (25) der miteinander verbundenen Gabeln getragenen Drehachse (26) montiert ist.

3. Kupplungssystem nach Anspruch 1, dadurch gekennzeichnet, daß die erste Gabel (25) und die zweite Gabel (27) durch eine Kette, einen Kreuzzapfen oder ein Zwischenstück miteinander verbunden sind, das zwei Bohrungen mit zueinander senkrechten und sich nicht schneidenden Achsen für die Montage von Drehachsen besitzt und an den Drehachsen (26, 28) montiert ist, die von der ersten und der zweiten Gabel (25, 27) getragen sind.

4. Kupplungssystem nach einem der Ansprüche 1 bis 3, dadurch gekennzeichnet, daß die zweite Einhängevorrichtung (11) zwischen der Kuppelstange (10) und dem Zusatzgerät (6) eine Relativbewegung mit einem Freiheitsgrad der Drehung um eine Achse zuläßt, die zum Boden im wesentlichen parallel und zu der für die Bewegung des Zusatzgeräts vorgesehene Richtung senkrecht ist.

5. Kupplungssystem nach Anspruch 4, dadurch gekennzeichnet, daß die Montageeinrichtungen der zweiten Einhängevorrichtung (11) an dem Zusatzgerät (6) so angeordnet sind, daß diese Vorrichtung sich in Nähe einer zum Boden senkrechten Ebene befindet, in der die für das Gerät vorgesehene Bewegungsachse liegt, wobei die zweite Einhängevorrichtung zwei Achsen (38, 39) besitzt, die senkrecht zu der für das Zusatzgerät (6) vorgesehenen Bewegungsachse und parallel zum Boden montiert werden sollen und über deren erste (38) das Zusatzgerät (6) an die Kuppelstange (10) angelenkt ist, während eine zweite Achse (39) vor der ersten in einer Bohrung der Stange montiert ist und mit einer mit dem Gerät fest verbundenen Aussparung (40) zusammenwirkt, die die Form eines Kreisbogenteils mit einem auf der Achse der ersten Achse liegenden Mittelpunkt hat, um die Relativdrehung zwischen Gerät und Stange auf diesen Kreisbogenteil zu begrenzen.

**6.** Kupplungssystem nach einem der Ansprüche 1 bis 5, dadurch gekennzeichnet, daß die Montageeinrichtungen der ersten Einhängevorrichtung (9) gegen das hintere Ende des Pflugs zu angeordnet sind, und daß die Kuppelstange (10) eine solche Länge hat, daß der Abstand zwischen der ersten und der zweiten Einhängevorrichtung (9, 11) wenigstens gleich dem Abstand des hinteren Endes des Pflugs von den vom Gestell getragenen Montageeinrichtungen der ersten Einhängevorrichtung ist.

**7.** Kupplungssystem nach einem der Ansprüche 1 bis 6, dadurch gekennzeichnet, daß das Gestell (7) eine Vorrichtung zur Einstellung der Stellung der Montageeinrichtungen der ersten Einhängevorrichtung besitzt.

**8.** Kupplungssystem nach Anspruch 7, dadurch gekennzeichnet, daß die Einstellvorrichtung einen Arm (45, 69) besitzt, der die Montageeinrichtungen der ersten Einhängevorrichtung (9) trägt, an dem Gestell (7) angelenkt ist und durch einen an diesem Arm angelenkten Betätigungszylinder (47, 71) betätigt ist.

**9.** Kupplungssystem nach einem der Ansprüche 7 oder 8, dadurch gekennzeichnet, daß die Einstellvorrichtung ein Gelenkparallelogramm mit zwei Verbindungsarmen (68, 69) besitzt, die mit einem ersten Ende am Gestell (7) angelenkt sind, während sie mit einem zweiten Ende in gleichem Abstand an einem die Montageeinrichtungen der ersten Einhängevorrichtung (9) tragenden Arm (70) angelenkt sind.

**10.** Kupplungssystem nach einem der Ansprüche 7 bis 9, dadurch gekennzeichnet, daß im Fall eines Pflugs, der eine Wendevorrichtung mit einem Wendezylinder aufweist, dessen Kolbenstange eine erste Endstellung einnimmt, wenn der Pflug in Arbeitsstellung ist, während eine Phase des Übergangs der Kolbenstange in eine zweite Endstellung und dann eine Phase des Übergangs in die erste Endstellung der Kolbenstange während eines Wendens stattfindet, die Einstellvorrichtung einen Betätigungszylinder (71) besitzt, der gleichzeitig mit dem Wendezylinder betätigt ist, wobei eine Phase des Übergangs von der ersten in die zweite Endstellung des Wendezylinders einer Phase der Annäherung der Montageeinrichtungen der ersten Einhängevorrichtung an die Wendeachse (5) und umgekehrt entspricht und der Betätigungszylinder mit dem Gestell (7) über einen durch einen Stellzylinder (73) in Bewegung gesetzten Schlitten (72) verbunden ist.

FIG.1

FIG.2

FIG.3

FIG.4

FIG.5

FIG-6

FIG.7

FIG.8

FIG.9

FIG.12

FIG.11

FIG.10

EP 0 274 299 B1

FIG.13

EP 0 274 299 B1

FIG-14

FIG-15

FIG-16

FIG-17

FIG-18